# EUROPÄISCHE PATENTSCHRIFT

(11) **EP 4 070 647 B1**
(45) Veröffentlichungstag und Bekanntmachung des Hinweises auf die Patenterteilung: **15.10.2025**
(21) Anmeldenummer: 22166927.8
(22) Anmeldetag: 06.04.2022
(51) Int. Cl.: A01G 9/28, E01C 11/22

(54) **BEGRENZUNGSVORRICHTUNG UND ANORDNUNG**
LIMITING DEVICE AND ASSEMBLY
DISPOSITIF DE LIMITATION ET AGENCEMENT

(30) Priorität: 09.04.2021 DE 102021108892
(43) Veröffentlichungstag der Anmeldung: 12.10.2022
(73) Patentinhaber: ACO Ahlmann SE & Co. KG, 24782 Büdelsdorf (DE)
(72) Erfinder: Jung, Mark, 24768 Rendsburg (DE); Kulyk, Maryan, 82408 Strij (UA); Kunets, Pavlo, 81122 s. Yampil (UA)
(74) Vertreter: Meissner Bolte Partnerschaft mbB

(56) Entgegenhaltungen:
- EP-A1- 3 315 018
- AU-A1- 2005 244 508
- DE-U1- 202017 105 377
- US-B1- 7 555 863

## Beschreibung

Die Erfindung betrifft eine Begrenzungsvorrichtung nach dem Oberbegriff des Anspruchs 1. Ferner betrifft die Erfindung eine Anordnung von wenigstens zwei Begrenzungsvorrichtungen.

Begrenzungsvorrichtungen bzw. Randeinfassungen oder Rasenkanten dienen zur Abgrenzung von Rasenflächen, Beeten, Wegen und Terrassen. Dabei ist es neben einer guten Witterungsbeständigkeit vorteilhaft, wenn sich die Begrenzungsvorrichtung einfach in die gewünschte Form bringen lässt sowie schnell und unkompliziert verlegt bzw. montiert werden kann.

Aus DE 523 477 C ist eine flexible Rasenkante bekannt, die an einem Ende Zungen und an einem entgegengesetzten Ende Schlitze aufweist, wobei die Zungen im eingebauten Zustand zum Verbinden in die Schlitze eingreifen und anschließend umgeschlagen werden. Die gewellte Form erlaubt ein leichtes Verbiegen der Rasenkante. Durch diese Merkmale ist es möglich, dass die Rasenkante mit sich selbst oder einer anderen baugleichen Rasenkante verbunden werden kann.

Die DE 20 2017 105377 U1 und US 7 555 863 B1 offenbaren eine Begrenzungsvorrichtung gemäß des Oberbegriffs des unabhängigen Anspruchs 1.

Die bekannte Rasenkannte hat den Nachteil, dass es sich hier lediglich um eine einfache Steckverbindung handelt, bei der die Zungen umgeschlagen werden müssen, um ein Lösen der Verbindung zu verhindern. Es ist möglich, dass beim mehrmaligen Verbiegen der Zungen diese abbrechen. Ferner stellt das umschlagen einen erhöhten Aufwand dar, der beim Verbinden jeder Rasenkante Zeit kostet.

Der vorliegenden Erfindung liegt daher die Aufgabe zu Grunde, eine Begrenzungsvorrichtung anzugeben, die eine einfache und schnelle Montage ohne Werkzeug und ohne Verbiegen ermöglicht. Ferner ist es die Aufgabe der Erfindung eine Anordnung von zumindest zwei Begrenzungsvorrichtungen anzugeben.

Erfindungsgemäß wird diese Aufgabe mit Blick auf
- die Begrenzungsvorrichtung durch den Gegenstand des Anspruchs 1 und
- die Anordnung durch den Gegenstand des Anspruchs 14 gelöst.

Konkret wird die Aufgabe durch eine Begrenzungsvorrichtung, insbesondere für Beete, Kies, Wege, Pflasterbeläge, Terrassen oder Rasenflächen, umfassend einen Begrenzungskörper, insbesondere ein Blech/Kunststoff-Formteil, mit einem Verbindungselement, das an einem ersten axialen Ende angeordnet ist, und einem Aufnahmeelement, das an einem zweiten axialen Ende angeordnet ist, wobei das Verbindungselement wenigstens eine Zunge aufweist, die sich in eine Längsrichtung des Begrenzungskörpers erstreckt und das Aufnahmeelement wenigstens eine Lasche zur Aufnahme der Zunge aufweist, so dass die Begrenzungsvorrichtung mit sich selbst oder mit einer weiteren entsprechenden Begrenzungsvorrichtung verbindbar ist, gelöst. Erfindungsgemäß ist im Bereich des ersten oder des zweiten axialen Endes wenigstens eine Ausnehmung angeordnet und im Bereich des jeweils anderen axialen Endes wenigstens ein Verschlusselement angeordnet, wobei das Verschlusselement mit der Ausnehmung im montierten Zustand eine formschlüssige Verbindung, insbesondere eine Rastverbindung, bildet.

Die Begrenzungsvorrichtung ist vorzugsweise aus einem Blech hergestellt. Andere Materialien, beispielsweise Kunststoffe, sind möglich.

Die Begrenzungsvorrichtung ist mit sich selbst oder mit einer weiteren Begrenzungsvorrichtung verbindbar. Auf die verschiedenen Anwendungsmöglichkeiten wird an anderer Stelle genauer eingegangen.

An den beiden axialen Enden sind jeweils das Verbindungselement und das Aufnahmeelement angeordnet. Unter den axialen Enden sind jeweils die Endbereiche des Begrenzungskörpers zu verstehen. Das Verbindungselement wirkt mit dem Aufnahmeelement zusammen und bildet im montierten Zustand eine Steckverbindung. Dabei ist die Zunge in der Lasche angeordnet. Das bedeutet, dass die Zunge zumindest teilweise von der Lasche umschlossen ist, so dass eine Bewegung orthogonal zur Längsrichtung des Begrenzungskörpers wenigstens teilweise blockiert ist.

Unter der Längsrichtung ist die Richtung zu verstehen, die sich zwischen dem ersten und dem zweiten axialen Ende erstreckt.

Der Begrenzungskörper weist zusätzlich eine Ausnehmung und ein Verschlusselement auf, die miteinander zusammenwirken und im montierten Zustand in Längsrichtung eine formschlüssige Verbindung bilden. Das Verschlusselement kann vorzugsweise als Rastelement und die hergestellte Verbindung kann vorzugsweise als Rastverbindung ausgebildet sein. Durch das Verschlusselement und die Ausnehmung wird folglich ein Verschieben, insbesondere ein Auseinanderverschieben, der axialen Enden in eine Längsrichtung verhindert. Als weiterer vorteilhafter Effekt wird dadurch das Bilden von Fugen verhindert.

Das Verschlusselement ist am selben axialen Ende wie die Laschen angeordnet. Alternativ kann das Verschlusselement am selben axialen Ende wie die Zungen angeordnet sein. Die Ausnehmung ist am jeweils anderen axialen Ende angeordnet.

Die erfindungsgemäße Begrenzungsvorrichtung hat somit den Vorteil, dass durch eine einzige Bewegung in eine Längsrichtung eine feste Verbindung hergestellt werden kann. Das bedeutet, dass eine Montage ohne zusätzliches Werkzeug möglich ist. Des Weiteren sind auch kein Verbiegen und kein Verschrauben notwendig. Das ermöglicht eine vereinfachte und beschleunigte Montage der erfindungsgemäßen Begrenzungsvorrichtung.

Weitere bevorzugte Ausführungsformen sind in den Unteransprüchen angegeben.

In einer besonders bevorzugten Ausführungsform ist die Ausnehmung von der Zunge und das Verschlusselement von der Lasche oder umgekehrt jeweils versetzt, insbesondere orthogonal zur Längsrichtung des Begrenzungskörpers versetzt, angeordnet. Dadurch bilden das Verschlusselement und die Aufnahme einen eigenständigen, von den Zungen und Laschen getrennten Verbindungsmechanismus. Dadurch wird das Einschieben der Zungen in die Laschen durch das Verschlusselement nicht behindert.

In einer bevorzugten Ausführungsform steht das Verschlusselement in eine Richtung orthogonal zur Oberfläche des Begrenzungskörpers vor. Insbesondere steht das Verschlusselement im montierten Zustand durch die Ausnehmung hindurch vor. Das bewirkt, dass eine Bewegung der Begrenzungsvorrichtung in Längsrichtung blockiert wird. Mit anderen Worten kann so der Formschluss zwischen dem Verschlusselement und der Ausnehmung gebildet werden.

Es ist vorteilhaft, wenn das Verschlusselement bei der Montage in Richtung der Ausnehmung eine negative Steigung aufweist. Anders gesagt weist das Verschlusselement eine Neigung auf. Beim Verbinden der axialen Enden wird so der Widerstand verringert, um das Verschlusselement in die Aufnahme zu schieben. Anders gesagt gleitet das Verschlusselement durch die Neigung in die Aufnahme.

Um diese Eigenschaft weiter zu verbessern, ist das Verschlusselement wenigstens abschnittsweise gewölbt. Unter einer Wölbung des Verschlusselements ist zu verstehen, dass das Verschlusselement im Querschnitt eine Krümmung aufweist. Die Wölbung verhindert ferner, dass eine Person sich an dem vorstehenden Verschlusselement verletzen kann.

Es ist möglich, dass eine Öffnung an der bei der Montage von der Ausnehmung entfernten Seite des Verschlusselements angrenzt. Die Öffnung erleichtert das Eindrücken des Verschlusselements, um die Verbindung bei Bedarf leichter lösen zu können.

In einer besonders bevorzugten Ausführungsform weist das Verbindungselement wenigstens zwei, insbesondere drei, Zungen und das Aufnahmeelement wenigstens zwei, insbesondere drei, Laschen auf. Die Anordnung der mehreren Zungen und Laschen an den axialen Enden bewirkt, dass die axialen Enden flächig und eng miteinander verbunden sind.

In einer weiteren besonders bevorzugten Ausführungsform steht die wenigstens eine Lasche in eine Richtung orthogonal zur Oberfläche des Begrenzungskörpers vor und weist eine sich in Längsrichtung des Begrenzungskörpers erstreckende Durchgangsöffnung auf.

In einer weiteren bevorzugten Ausführungsform weist das Verbindungselement eine Stufe auf und das Verbindungselement ist durch die Stufe von der Oberfläche des Begrenzungskörpers versetzt.

Die vorstehende Lasche und das Verbindungselement, das durch die Stufe von der Oberfläche des Begrenzungskörpers versetzt ist, ermöglichen es, dass die Zunge in die Lasche eingesteckt werden kann, ohne dass sich die beiden axialen Enden 13, 15 gegenseitig im Weg sind.

Erfindungsgemäß ist das Verbindungselement in einer Verbindungsebene angeordnet, wobei sich die Verbindungsebene parallel versetzt zu einer Oberfläche des Begrenzungskörpers erstreckt und wobei das Aufnahmeelement dazu angepasst ist, mit dem Verbindungselement derart zusammen zu wirken, dass der Begrenzungskörper auf Stoß verbindbar ist. Diese Ausgestaltung ist vorteilhaft, da so die Bildung von Fugen gemindert wird. Konkret ist es durch die versetzte Verbindung möglich, die Enden des oder der Begrenzungskörper auf Stoß anzuordnen. Besonders bevorzugt überlappt das Verbindungselement sich wenigstens abschnittsweise oder vollständig mit dem zweiten axialen Ende, das mit dem ersten axialen Ende auf Stoß verbunden ist. Durch das Überlappen wird die Bildung von Fugen verhindert bzw. wenigstens vermindert. Darüber hinaus erzielt man auf diese Art und Weise eine bündige Fläche. Dadurch wird das Hindurchdringen von Erde oder Gras verhindert. Ferner wird ein schöner optischer Eindruck erzielt.

In einer vorteilhaften Ausführungsform weist der Begrenzungskörper eine geradlinige Perforierung auf, die sich orthogonal zur Längsrichtung des Begrenzungskörpers erstreckt. Der Begrenzungskörper kann entlang der Perforierung leicht verbogen werden. Insbesondere kann der Begrenzungskörper in einem Winkel verbogen werden. Dadurch sind eckige Strukturen mit einer oder mehreren Begrenzungsvorrichtungen möglich.

Es ist vorteilhaft, wenn der Begrenzungskörper wenigstens ein Befestigungselement aufweist, das im eingebauten Zustand auf einer Bodenfläche aufliegt, insbesondere mit der Bodenfläche verschraubt, vernagelt und/oder verankert ist. Dadurch wir das Positionieren der Begrenzungsvorrichtungen beim Verlegen erleichtert. Insbesondere kann so die Begrenzungsvorrichtung beim Verlegen im Boden fixiert und ein nachträgliches Verschieben verhindert werden.

Es ist weiter vorteilhaft, wenn die Begrenzungsvorrichtung einstückig, insbesondere monolithisch, hergestellt ist. Auf diese Weise können Fertigungskosten gespart werden.

Mit Blick auf die Witterungsbeständigkeit umfasst die Begrenzungsvorrichtung vorzugsweise verzinkten Stahl, Edelstahl und/oder Cortenstahl. Andere Materialien, beispielsweise Kunststoffe, sind ebenfalls möglich.

Im Rahmen der Erfindung wird ferner eine Anordnung mit wenigstens zwei Begrenzungsvorrichtungen offenbart und beansprucht.

Die Erfindung wird im Folgenden anhand von Ausführungsbeispielen unter Bezugnahme auf die beigefügten Zeichnungen näher erläutert.

Darin zeigen
- Fig. 1: eine perspektivische Ansicht eines Ausführungsbeispiels einer erfindungsgemäßen Begrenzungsvorrichtung;
- Fig. 2: eine perspektivische Nahansicht eines ersten und zweiten axialen Endes einer Begrenzungsvorrichtung gemäß Fig. 1;
- Fig. 3: eine perspektivische Ansicht gemäß Fig. 2 im verbundenen Zustand;
- Fig. 4: eine Detailansicht einer Ausnehmung und eines Verschlusselements im verbundenen Zustand;
- Fig. 5: eine Detailansicht einer Lasche und eines Verschlusselements gemäß der Begrenzungsvorrichtung nach Fig. 2;
- Fig. 6: eine Detailansicht einer Stufe eines Verbindungselements gemäß der Begrenzungsvorrichtung nach Fig. 2;
- Fig. 7: eine perspektivische Ansicht zweier miteinander verbundener Begrenzungsvorrichtungen gemäß Fig. 1;
- Fig. 8: eine perspektivische Ansicht eines weiteren Ausführungsbeispiels einer erfindungsgemäßen Begrenzungsvorrichtung mit Perforierung;
- Fig. 9: eine perspektivische Ansicht eines weiteren Ausführungsbeispiels einer erfindungsgemäßen Begrenzungsvorrichtung mit Befestigungselementen;
- Fig. 10: eine perspektivische Ansicht einer kreisförmigen Anordnung einer Begrenzungsvorrichtung gemäß Fig. 1;
- Fig. 11: eine perspektivische Ansicht mehrerer viereckig gefalteter Begrenzungsvorrichtungen gemäß Fig. 8;
- Fig. 12: eine perspektivische Ansicht eines Ausführungsbeispiels gemäß Fig. 1 und eines Ausführungsbeispiels gemäß Fig. 8, die miteinander verbunden sind.

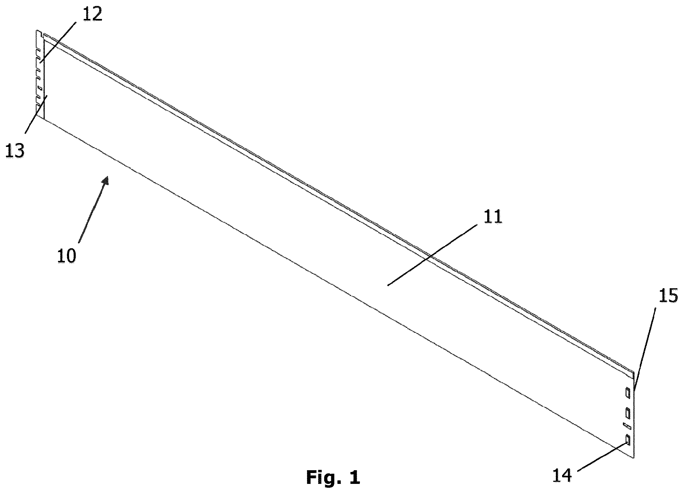

In Fig. 1 ist eine Begrenzungsvorrichtung 10 mit einem Begrenzungskörper 11, der ein erstes axiales Ende 13 und ein zweites axiales Ende 15 aufweist, dargestellt. Am ersten axialen Ende 13 ist ein Verbindungselement 12 angeordnet und am zweiten axialen Ende 15 ist ein Aufnahmeelement 14 angeordnet.

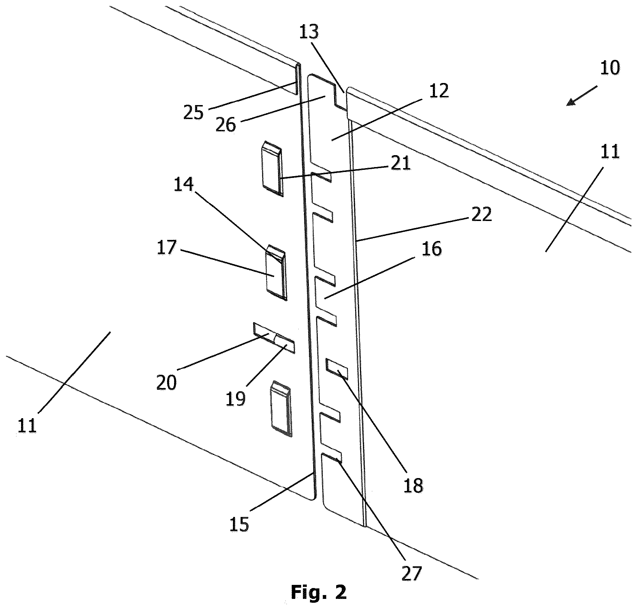

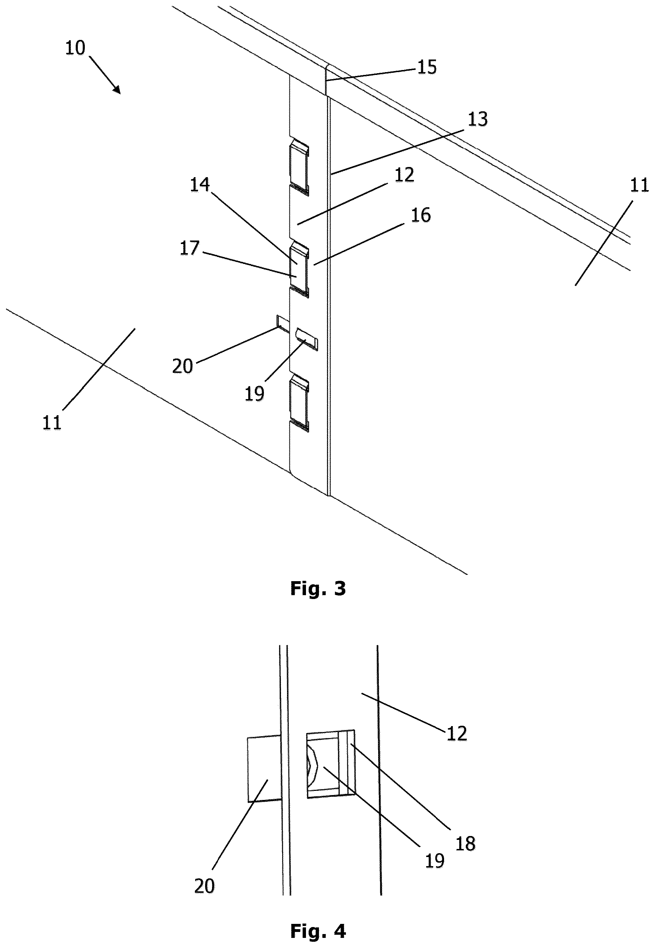

Fig. 2 zeigt das erste und das zweite axiale Ende 13, 15 in Gegenüberstellung. Fig. 3 zeigt die beiden axialen Enden 13, 15 im verbundenen Zustand. Hier kann es sich um zwei unterschiedliche oder um eine einzige Begrenzungsvorrichtung 10 handeln.

Der Begrenzungskörper 11 weist einen umgebogenen bzw. gefalteten Bereich auf. Der gefaltete Bereich ist an einer im eingebauten Zustand oben angeordneten Seite angeordnet. Der gefaltete Bereich erstreckt sich entlang der gesamten Längsachse des Begrenzungskörpers 11. Genauer gesagt erstreckt sich der gefaltete Bereich vom zweiten axialen Ende 15 bis zum Verbindungselement 12.

Das Verbindungselement 12 ist durch eine Stufe 22 vom Begrenzungskörper 11 abgegrenzt. Anders gesagt liegt das Verbindungselement 12 auf einer zur Oberfläche des Begrenzungskörpers 11 parallelen Ebene.

Das Verbindungselement 12 weist drei Zungen 16 auf, die sich in eine Längsrichtung des Begrenzungskörpers 11 erstrecken. Die Zungen 16 sind in Querrichtung voneinander beabstandet.

Unter einer Querrichtung ist eine Richtung orthogonal zur Längsrichtung des Begrenzungskörpers und parallel zu einer Oberfläche des Begrenzungskörpers 11 zu verstehen. Unter der Oberfläche ist die Fläche zu verstehen, die im eingebauten Zustand vertikal angeordnet ist.

Die Zungen 16 weisen jeweils zwei Aussparungen 27 auf, die die Zungen 16 in Querrichtung begrenzen. Die Aussparungen 27 und die Zungen 16 weisen eine rechteckige Geometrie auf. Alternativ sind andere Formen sowie eine andere Anzahl an Zungen 16 und Aussparungen 27 denkbar.

Das Verbindungselement 12 wirkt mit dem Aufnahmeelement 14 zusammen. Dazu umfasst das Aufnahmeelement 14 drei Laschen 17, die korrespondierend zu den Zungen 16 im Bereich des zweiten axialen Endes 15 angeordnet sind. Entsprechend den Zungen 16 ist eine andere Anzahl an Laschen 17 denkbar.

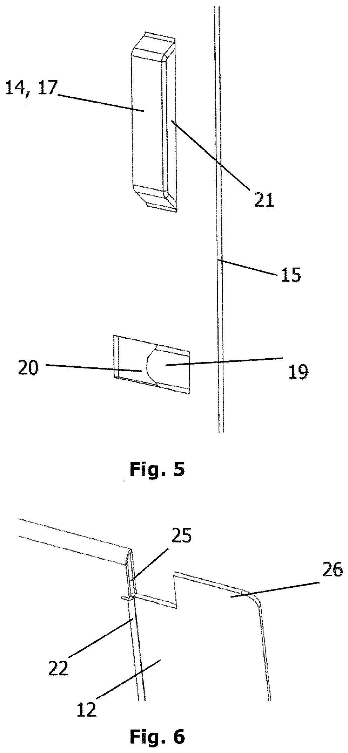

Eine der Laschen 17 ist in Fig. 5 im Detail dargestellt. Die Laschen 17 sind brückenförmig ausgebildet. Konkret weisen die Laschen 17 eine Durchgangsöffnung 21 in Längsrichtung des Begrenzungskörpers 11 auf. Die Laschen 17 sind in Querrichtung jeweils durch Verbindungsabschnitte mit dem Begrenzungskörper 11 verbunden. Die Laschen 17 sind vorzugsweise aus dem Material des Begrenzungskörpers 11 ausgeformt. Das bedeutet, dass die Laschen 17 und der Begrenzungskörper 11 monolithisch ausgebildet sind.

Fig. 3 zeigt die Anordnung gemäß Fig. 2 im verbundenen Zustand. Hier ist erkennbar, dass die Verbindungsabschnitte der Laschen 17 im montierten Zustand in den Aussparungen 27 angeordnet sind und dass die Zungen 16 in den Durchgangsöffnungen 21 der Laschen 17 angeordnet sind.

Das Verbindungselement 12 umfasst eine rechteckige Ausnehmung 18. Die Ausnehmung 18 ist zwischen zwei Zungen 16 angeordnet. Konkret ist die Ausnehmung 18 zwischen den beiden im eingebauten Zustand unteren Zungen 16 angeordnet. Alternativ sind weitere Formen und mehrere Ausnehmungen 18 möglich.

Im Bereich des zweiten axialen Endes 15 ist ein Verschlusselement 19 zwischen zwei Laschen 17 angeordnet. Eine andere Anordnung des Verschlusselements, beispielsweise ausgehend vom zweiten axialen Ende hinter den Laschen oder im eingebauten Zustand unter bzw. über den Laschen, ist möglich. Das Verschlusselement 19 und die Ausnehmung 18 sind jeweils korrespondierend angeordnet, so dass das Verschlusselement 19 im verbundenen Zustand in der Ausnehmung 18 angeordnet ist. Es sind mehrere Verschlusselemente 19 und Ausnehmungen 18 möglich. Eine Detailansicht des Verschlusselements 19 und der Ausnehmung 18 im verbundenen Zustand ist in Fig. 4 dargestellt.

Das Verschlusselement 19 ist als ein vorstehendes Strukturelement ausgebildet. Das Verschlusselement19 weist eine Neigung auf. Die Neigung beginnt an der dem zweiten axialen Ende 15 zugewandten Seite des Verschlusselements 19. Die Neigung steig in Richtung des ersten axialen Endes 13 an. Das Verschlusselement 19 weist im Querschnitt eine Wölbung auf. Im montierten Zustand steht das Verschlusselement 19 wenigstens teilweise aus der Ausnehmung 18 vor.

An das Verschlusselement 19 grenzt eine Öffnung 20. Die Öffnung 20 ist an der dem zweiten axialen Ende 15 abgewandten Seite des Verschlusselement 19 angeordnet. Die Öffnung 20 ist im verbundenen Zustand teilweise von dem Verbindungselement 12 bedeckt.

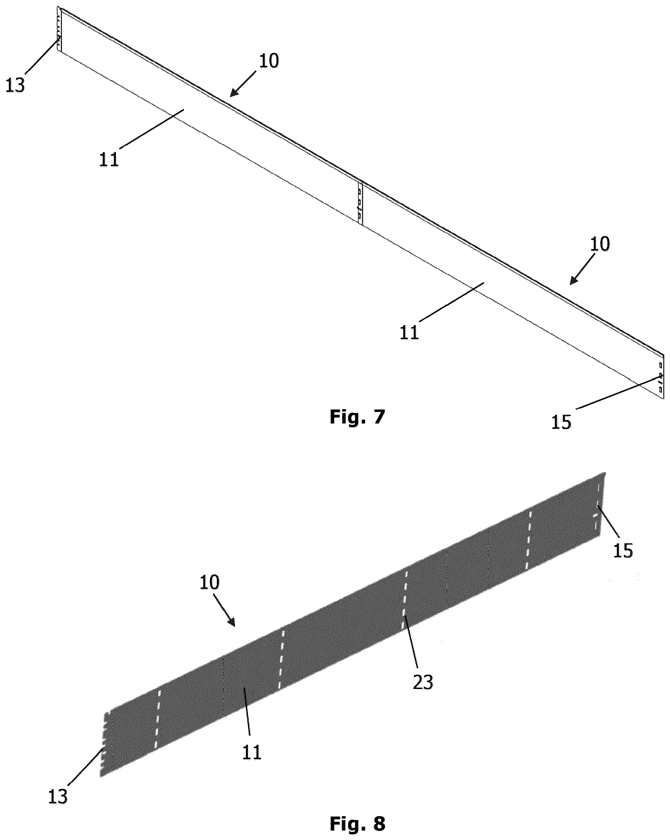

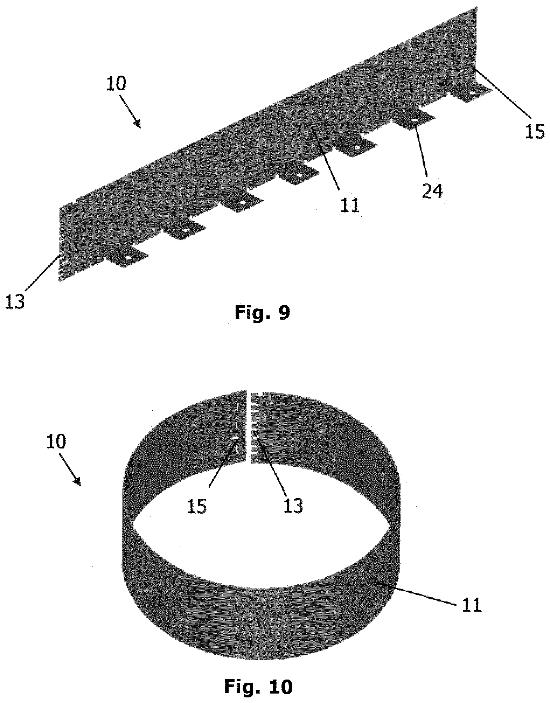

Fig. 7 zeigt eine Ansicht von zwei miteinander verbundenen Begrenzungsvorrichtungen 10 der oben beschriebenen Art. Alternativ ist es möglich, dass wie in Fig. 10 dargestellt die axialen Enden 13, 15 einer einzigen Begrenzungsvorrichtung 10 miteinander verbunden sind und die Begrenzungsvorrichtung 10 einen kreisförmigen Bereich begrenzt.

Wie in Fig. 8 dargestellt, kann der Begrenzungskörper 11 eine oder mehrere Perforierungen 23 aufweisen. Der Begrenzungskörper 11 in Fig. 8 weist vier Perforierungen 23 auf. Die Perforierungen 23 erstrecken sich jeweils entlang einer Querrichtung des Begrenzungskörpers 10. Durch die Perforierung 23 kann der Begrenzungskörper 11 an vordefinierten Stellen leichter verbogen werden. Die Perforierungen 23 in Fig. 8 sind derart auf dem Begrenzungskörper 10 verteilt angeordnet, dass sich die Begrenzungsvorrichtung 10 zu einem Rechteck formen lässt.

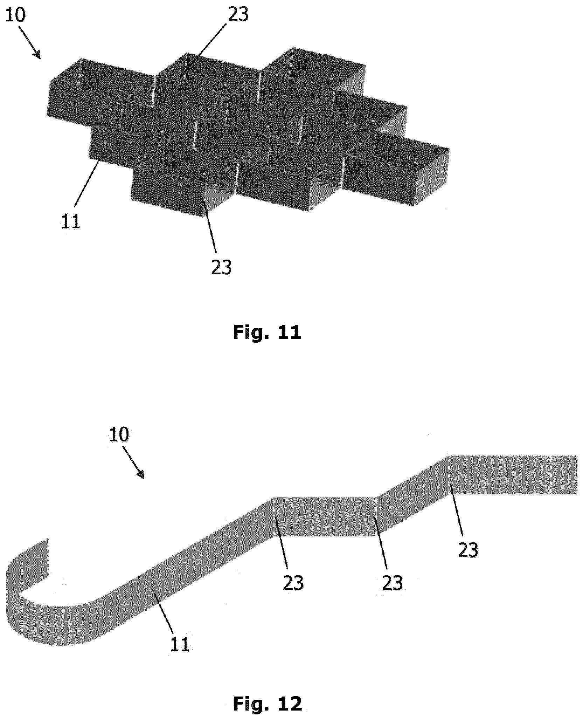

In Fig. 11 sind mehrere Begrenzungsvorrichtungen 10 gemäß Fig. 8 dargestellt, die jeweils zu einem Rechteck geformt und zu einer Wabenstruktur angeordnet wurden. Eine andere Verteilung der Perforierungen 23 auf dem Begrenzungskörper 10, um andere Formen zu ermöglichen, ist nicht ausgeschlossen.

In Fig. 9 ist eine Begrenzungsvorrichtung 10 gemäß Fig. 1 dargestellt, die Befestigungselemente 24 aufweist. Die Befestigungselemente 24 sind an einer im eingebauten bzw. im verlegten Zustand unteren Seite des Begrenzungskörpers 11 angeordnet. Die Befestigungselemente 24 erstrecken sich orthogonal zur Oberfläche des Begrenzungskörpers 11. Genauer gesagt sind die Befestigungselemente 24 als um 90° abgewinkelte Überstände des Begrenzungskörpers 11 ausgebildet. Der Winkel bezieht sich auf die im eingebauten Zustand vertikal ausgerichtete Oberfläche des Begrenzungskörpers 11. Im hier gezeigten Ausführungsbeispiel umfasst der Begrenzungskörper 10 sieben Befestigungselemente 24. Weitere oder weniger Befestigungselemente 24 sind möglich. Die Befestigungselemente 24 wei-ßen jeweils eine Befestigungsöffnung auf. Durch die Befestigungsöffnung kann die Begrenzungsvorrichtung 10 in einem Boden befestigt, insbesondere verankert oder verschraubt, werden.

Fig. 12 zeigt eine Kombination einer Begrenzungsvorrichtung 10 ohne Perforierungen 23 und einer Begrenzungsvorrichtung 10 mit Perforierungen 23. Die Begrenzungsvorrichtung 10 ohne Perforierung 23 ist in einem Kreisbogen angeordnet und die Begrenzungsvorrichtung 10 mit Perforierung 23 weist mehrere Winkel auf. Durch die Kombination der beschriebenen Begrenzungsvorrichtungen 10 sind viele unterschiedliche Formen möglich. Die Begrenzungsvorrichtung 10 kann daher an verschiedene Gegebenheiten oder Wünsche angepasst werden.

Der gefaltete Bereich hat zwei Funktionen. Zum einen weist der Begrenzungskörper 11 durch den gefalteten Bereich im verlegten Zustand keine scharfe Kante auf, an der sich eine Person verletzen könnte. Des Weiteren bildet der gefaltete Bereich einen Zwischenraum 25 aus. Dieser Zwischenraum 25 dient als Führung für das Verbindungselement 12. Dazu weist das Verbindungselement 12 ein Führungselement 26 auf. Das Führungselement 26 erstreckt sich im eingebauten Zustand nach oben. Im eingebauten Zustand ist das Führungselement 26 vollständig in dem Zwischenraum 25 angeordnet und der gefaltete Bereich des ersten und des zweiten axialen Endes liegen eng aneinander an.

In Fig. 6 ist die Stufe 22 im Detail erkennbar. Die Stufe 22 grenzt das Verbindungselement 12 von dem Begrenzungskörper 11 ab. Durch die Stufe 22 ist das Verbindungselement 12 zu der Oberfläche des Begrenzungskörpers 11 parallel versetzt. Das bewirkt, dass die axialen Enden 13, 15 auf Stoß miteinander verbunden werden können, so dass keine Fuge gebildet ist. Ferner sind die Zungen 16 dadurch auf Höhe der Durchgangsöffnungen 21 der Laschen 17 angeordnet und die Ausnehmung 18 kann zu Bildung der Rastverbindung über das Verschlusselement 19 bewegt werden.

Die Zungen 16 in Kombination mit den Laschen 17 ermöglichen ein einfaches und schnelles Zusammenstecken. Das bedeutet, dass die beiden axialen Enden 13, 15 zum Verbinden jeweils entlang einer Längsrichtung einfach aufeinander zu bewegt werden. Die Zungen 16 sind in den Laschen 17 nur in Längsrichtung beweglich.

Die Aussparungen 27 ermöglichen es, dass die Zungen 16 vollständig in die Durchgangsöffnungen 21 der Laschen 17 angeordnet werden können. Daraus folgt, dass sich das Verbindungselement 12 im montierten Zustand mit dem zweiten axialen Ende 15 überlappt, so dass das zweite axiale Ende 15 mit dem ersten axialen Ende 13, an dem das Verbindungselement 12 parallel versetzt angeordnet ist, auf Stoß verbunden ist.

Das Verschlusselement 19 hat die Funktion, zusammen mit der Ausnehmung 18 eine Rastverbindung zu bilden. Die Rastverbindung fixiert im verbundenen bzw. im montierten Zustand die beiden axialen Enden 13, 15 in eine Längsrichtung, insbesondere in eine von dem jeweils verbundenen axialen Ende 13, 15 abgewandte Längsrichtung. Die Bewegung in eine Längsrichtung der beiden axialen Enden 13, 15 zueinander hin wird zusätzlich durch die Aussparungen 27 an den Zungen 16 begrenzt. Genauer gesagt bilden die Aussparungen 27 Anschläge für die Laschen 17. Dadurch, dass der Begrenzungskörper 11 durch das Führungselement 26 und die Zungen 16 und Laschen 17 in eine Richtung orthogonal zur Längsrichtung fixiert ist, verbleibt das Verschlusselement 19 in der Aufnahme 18.

Die Neigung des Verschlusselements 19 bewirkt ein leichtes Einrasten des Verschlusselements 19 in die Ausnehmung 18. Dieser Effekt wird durch die Wölbung des Verschlusselements 19 unterstützt. Die Wölbung verhindert ebenso scharfe Kanten, die zu Verletzungen führen können. Die Öffnung 20 erlaubt eine größere Elastizität des Verschlusselements 19. Anders gesagt kann das Verschlusselement 19 zum Lösen der Verbindung so einfacher eingedrückt werden.

Durch die Kombination der Steckverbindung und der Rastverbindung ist eine in allen Freiheitsgraden fixierte, formschlüssige Verbindung zwischen den axialen Enden 13, 15 einer oder mehrerer Begrenzungsvorrichtungen 10 möglich. Die Verbindung ist dabei ohne Werkzeug oder Verbiegen realisierbar. Die Montage ist insbesondere einfach zu bewerkstelligen, da eine Bewegung der beiden axialen Enden 13, 15 in Längsrichtung für das Verbinden ausreichend ist. Anders gesagt ist kein Drehen oder Ändern der Position bzw. des Winkels in Bezug auf die Längsrichtung des Begrenzungskörpers 11 zum Verbinden notwendig.

Konkret werden zum Verbinden die beiden axialen Enden 13, 15 einer oder zweier Begrenzungsvorrichtungen gegenüberliegend positioniert. Das Führungselement 26 wird zur korrekten Ausrichtung der axialen Enden 13, 15 im Zwischenraum 25 des gefalteten Bereichs angeordnet. Anschließend werden die beiden axialen Enden 13, 15 in Längsrichtung aufeinander zu bewegt, so dass die Zungen 16 in die Durchgangsöffnung 21 der Laschen 17 eingeschoben werden und das Verschlusselement 19 in die Ausnehmung 18 eingerastet wird.

### Bezugszeichenliste

- 10: Begrenzungsvorrichtung
- 11: Begrenzungskörper
- 12: Verbindungselement
- 13: erstes axiales Ende
- 14: Aufnahmeelement
- 15: zweites axiales Ende
- 16: Zunge
- 17: Lasche
- 18: Ausnehmung
- 19: Verschlusselement
- 20: Öffnung
- 21: Durchgangsöffnung
- 22: Stufe
- 23: Perforierung
- 24: Befestigungselement
- 25: Zwischenraum
- 26: Führungselement
- 27: Aussparungen

## Patentansprüche

1. Begrenzungsvorrichtung (10), insbesondere für Beete, Kies, Wege, Pflasterbeläge, Terrassen oder Rasenflächen, umfassend einen Begrenzungskörper (11), insbesondere ein Blech/Kunststoff-Formteil, mit einem Verbindungselement (12), das an einem ersten axialen Ende (13) angeordnet ist, und einem Aufnahmeelement (14), das an einem zweiten axialen Ende (15) angeordnet ist, wobei das Verbindungselement (12) wenigstens eine Zunge (16) aufweist, die sich in eine Längsrichtung des Begrenzungskörpers (11) erstreckt und das Aufnahmeelement (14) wenigstens eine Lasche (17) zur Aufnahme der Zunge (16) aufweist, so dass die Begrenzungsvorrichtung (10) mit sich selbst oder mit einer weiteren entsprechenden Begrenzungsvorrichtung (10) verbindbar ist, wobei im Bereich des ersten oder des zweiten axialen Endes (13, 15) wenigstens eine Ausnehmung (18) angeordnet ist und im Bereich des jeweils anderen axialen Endes (13, 15) wenigstens ein Verschlusselement (19) angeordnet ist, wobei das Verschlusselement (19) mit der Ausnehmung (18) im montierten Zustand eine formschlüssige Verbindung, insbesondere eine Rastverbindung, bildet,
**dadurch gekennzeichnet, dass**
das Verbindungselement (12) in einer Verbindungsebene angeordnet ist, wobei sich die Verbindungsebene parallel versetzt zu einer Oberfläche des Begrenzungskörpers (11) erstreckt und wobei das Aufnahmeelement (14) dazu angepasst ist, mit dem Verbindungselement (12) derart zusammen zu wirken, dass der Begrenzungskörper (11) auf Stoß verbindbar ist.

2. Begrenzungsvorrichtung nach Anspruch 1,
**dadurch gekennzeichnet, dass**
die Ausnehmung (18) von der Zunge (16) und das Verschlusselement (19) von der Lasche (17) oder umgekehrt jeweils versetzt, insbesondere orthogonal zur Längsrichtung des Begrenzungskörpers (11) versetzt, angeordnet ist.

3. Begrenzungsvorrichtung nach Anspruch 1 oder 2,
**dadurch gekennzeichnet, dass**
das Verschlusselement (19) in eine Richtung orthogonal zur Oberfläche des Begrenzungskörpers (11) vorsteht.

4. Begrenzungsvorrichtung nach einem der vorhergehenden Ansprüchen,
**dadurch gekennzeichnet, dass**
das Verschlusselement (19) bei der Montage in Richtung der Ausnehmung (18) eine negative Steigung aufweist.

5. Begrenzungsvorrichtung nach einem der vorhergehenden Ansprüche,
**dadurch gekennzeichnet, dass**
das Verschlusselement (19) wenigstens abschnittsweise gewölbt ist.

6. Begrenzungsvorrichtung nach einem der vorhergehenden Ansprüche,
**dadurch gekennzeichnet, dass**
eine Öffnung (20) an der bei der Montage von der Ausnehmung (18) entfernten Seite des Verschlusselements (19) angrenzt.

7. Begrenzungsvorrichtung nach einem der vorhergehenden Ansprüche,
**dadurch gekennzeichnet, dass**
das Verbindungselement (12) wenigstens zwei, insbesondere drei, Zungen (16) und das Aufnahmeelement (14) wenigstens zwei, insbesondere drei, Laschen (17) aufweist.

8. Begrenzungsvorrichtung nach einem der vorhergehenden Ansprüche,
**dadurch gekennzeichnet, dass**
die wenigstens eine Lasche (17) in eine Richtung orthogonal zur Oberfläche des Begrenzungskörpers (11) vorsteht und eine sich in Längsrichtung des Begrenzungskörpers (11) erstreckende Durchgangsöffnung (21) aufweist.

9. Begrenzungsvorrichtung nach einem der vorhergehenden Ansprüche,
**dadurch gekennzeichnet, dass**
das Verbindungselement (12) eine Stufe (22) aufweist und das Verbindungselement (12) durch die Stufe (22) von der Oberfläche des Begrenzungskörpers (11) versetzt ist.

10. Begrenzungsvorrichtung nach einem der vorhergehenden Ansprüche,
**dadurch gekennzeichnet, dass**
der Begrenzungskörper (11) eine geradlinige Perforierung (23) aufweist, die sich orthogonal zur Längsrichtung des Begrenzungskörpers (11) erstreckt.

11. Begrenzungsvorrichtung nach einem der vorhergehenden Ansprüche,
**dadurch gekennzeichnet, dass**
der Begrenzungskörper (11) wenigstens ein Befestigungselement (24) aufweist, der im eingebauten Zustand auf einer Bodenfläche aufliegt, insbesondere mit der Bodenfläche verschraubt, vernagelt und/oder verankert ist.

12. Begrenzungsvorrichtung nach einem der vorhergehenden Ansprüche,
**dadurch gekennzeichnet, dass**
die Begrenzungsvorrichtung (10) einstückig, insbesondere monolithisch, hergestellt ist.

13. Begrenzungsvorrichtung nach einem der vorhergehenden Ansprüche,
**dadurch gekennzeichnet, dass**
die Begrenzungsvorrichtung (10) verzinkten Stahl, Edelstahl und/oder Cortenstahl umfasst.

14. Anordnung mit wenigstens zwei Begrenzungsvorrichtungen (10) nach einem der vorhergehenden Ansprüche.

## Claims

1. Limiting device (10), in particular for flower beds, gravel, paths, paving, terraces or lawns, comprising a limiting body (11), in particular a sheet metal/plastic molded part, having a connecting element (12) arranged at a first axial end (13), and a receiving element (14) arranged at a second axial end (15), wherein the connecting element (12) has at least one tongue (16) extending in a longitudinal direction of the limiting body (11) and the receiving element (14) has at least one lug (17) for accommodating the tongue (16) so that the limiting device (10) can be connected to itself or to another corresponding limiting device (10), wherein at least one recess (18) is arranged in the region of the first or second axial end (13, 15) and at least one locking element (19) is arranged in the region of the respective other axial end (13, 15), wherein the locking element (19) forms a positive connection, in particular a snap-in connection, with the recess (18) in the assembled state, **characterized in that**
the connecting element (12) is arranged in a connecting plane, wherein the connecting plane extends parallel and offset to a surface of the limiting body (11) and wherein the receiving element (14) is adapted to interact with the connecting element (12) in such a way that the limiting body (11) can be connected edge to edge.

2. Limiting device according to claim 1,
**characterized in that**
the recess (18) relative to the tongue (16) and the locking element (19) relative to the lug (17), or vice versa, are each arranged in an offset manner, in particular offset orthogonally to the longitudinal direction of the limiting body (11).

3. Limiting device according to claim 1 or 2,
**characterized in that**
the locking element (19) protrudes in a direction orthogonal to the surface of the limiting body (11).

4. Limiting device according to one of the preceding claims,
**characterized in that**
the locking element (19) has a negative slope in the direction of the recess (18) when mounted.

5. Limiting device according to one of the preceding claims,
**characterized in that**
the locking element (19) is curved at least in sections.

6. Limiting device according to one of the preceding claims,
**characterized in that**
an opening (20) is adjacent to the side of the locking element (19) remote from the recess (18) during assembly.

7. Limiting device according to one of the preceding claims,
**characterized in that**
the connecting element (12) has at least two, in particular three, tongues (16) and the receiving element (14) has at least two, in particular three, lugs (17).

8. Limiting device according to one of the preceding claims,
**characterized in that**
the at least one lug (17) projects in a direction orthogonal to the surface of the limiting body (11) and has a through-opening (21) extending in the longitudinal direction of the limiting body (11).

9. Limiting device according to one of the preceding claims,
**characterized in that**
the connecting element (12) has a step (22) and the connecting element (12) is offset from the surface of the limiting body (11) by the step (22).

10. Limiting device according to one of the preceding claims,
**characterized in that**
the limiting body (11) has a straight perforation (23) extending orthogonally to the longitudinal direction of the limiting body (11).

11. Limiting device according to one of the preceding claims,
**characterized in that**
the limiting body (11) has at least one fastening element (24) which, when installed, rests on a floor surface, in particular is screwed, nailed and/or anchored to the floor surface.

12. Limiting device according to one of the preceding claims,
**characterized in that**
the limiting device (10) is manufactured in one piece, in particular monolithically.

13. Limiting device according to one of the preceding claims,
**characterized in that**
the limiting device (10) comprises galvanized steel, stainless steel, and/or Corten steel.

14. Assembly having at least two limiting devices (10) according to one of the preceding claims.

## Revendications

1. Dispositif de bordure (10), en particulier pour plates-bandes, gravier, chemins, dallages, terrasses ou pelouses, comprenant un corps de bordure (11), en particulier une pièce moulée en tôle/plastique, avec un élément d'assemblage (12) disposé à une première extrémité axiale (13) et un élément de réception (14) disposé à une deuxième extrémité axiale (15), dans lequel l'élément d'assemblage (12) comporte au moins une languette (16) qui s'étend dans un sens longitudinal du corps de bordure (11) et l'élément de réception (14) comporte au moins une patte (17) pour recevoir la languette (16), de sorte que le dispositif de bordure (10) peut être assemblé avec lui-même ou avec un autre dispositif de bordure (10) correspondant, au moins un évidement (18) étant prévu au niveau de la première ou deuxième extrémité axiale (13, 15) et au moins un élément de fermeture (19) étant disposé au niveau de l'autre extrémité axiale (13, 15) respective, lequel élément de fermeture (19) forme avec l'évidement (18), dans l'état monté, un assemblage par engagement positif, en particulier par enclenchement,
**caractérisé en ce que** l'élément d'assemblage (12) est disposé dans un plan d'assemblage, lequel plan d'assemblage est décalé parallèlement par rapport à une surface du corps de bordure (11), et l'élément de réception (14) étant adapté pour coopérer avec l'élément d'assemblage (12) de telle manière que le corps de bordure (11) peut être assemblé bout à bout.

2. Dispositif de bordure selon la revendication 1, **caractérisé en ce que** l'évidement (18) est décalé par rapport à la languette (16) et l'élément de fermeture (19) par rapport à la patte (17) ou vice versa, en particulier perpendiculairement au sens longitudinal du corps de bordure (11).

3. Dispositif de bordure selon la revendication 1 ou 2, **caractérisé en ce que** l'élément de fermeture (19) dépasse dans un sens perpendiculaire à la surface du corps de bordure (11).

4. Dispositif de bordure selon l'une des revendications précédentes, **caractérisé en ce que** l'élément de fermeture (19) présente une pente négative lors du montage en direction de l'évidement (18).

5. Dispositif de bordure selon l'une des revendications précédentes, **caractérisé en ce que** l'élément de fermeture (19) est au moins en partie bombé.

6. Dispositif de bordure selon l'une des revendications précédentes, **caractérisé en ce qu'**une ouverture (20) est limitrophe du côté de l'élément de fermeture (19) éloigné de l'évidement (18) lors du montage.

7. Dispositif de bordure selon l'une des revendications précédentes, **caractérisé en ce que** l'élément d'assemblage (12) comporte au moins deux, en particulier trois languettes (16) et l'élément de réception (14) comporte au moins deux, en particulier trois pattes (17).

8. Dispositif de bordure selon l'une des revendications précédentes, **caractérisé en ce que** l'au moins une patte (17) dépasse dans un sens perpendiculaire à la surface du corps de bordure (11) et présente une ouverture traversante (21) qui s'étend dans le sens longitudinal du corps de bordure (11).

9. Dispositif de bordure selon l'une des revendications précédentes, **caractérisé en ce que** l'élément d'assemblage (12) comporte un gradin (22) et l'élément d'assemblage (12) est décalé par le gradin (22) par rapport à la surface du corps de bordure (11).

10. Dispositif de bordure selon l'une des revendications précédentes, **caractérisé en ce que** le corps de bordure (11) présente une ligne droite de perforations (23) qui s'étend perpendiculairement au sens longitudinal du corps de bordure (11).

11. Dispositif de bordure selon l'une des revendications précédentes, **caractérisé en ce que** le corps de bordure (11) comporte au moins un élément de fixation (24) qui repose, dans l'état monté, sur une surface de sol, en particulier qui est vissé, cloué et/ou ancré dans la surface de sol.

12. Dispositif de bordure selon l'une des revendications précédentes, **caractérisé en ce que** le dispositif de bordure (10) est fabriqué d'un seul tenant, en particulier monolithique.

13. Dispositif de bordure selon l'une des revendications précédentes, **caractérisé en ce que** le dispositif de bordure (10) comprend de l'acier galvanisé, de l'acier inoxydable et/ou de l'acier Corten.

14. Agencement d'au moins deux dispositifs de bordure (10) selon l'une des revendications précédentes.
